# EUROPEAN PATENT APPLICATION

(11) **EP 2 536 109 A2**
(43) Date of publication of application: **19.12.2012**
(21) Application number: 12168815.4
(22) Date of filing: 22.05.2012
(51) Int. Cl.: H04M 1/02, H02J 9/00

(54) **Communication device with battery management**

(30) Priority: 16.06.2011 DK 201100454
(71) Applicant: KAMSTRUP A/S, 8660 Skanderborg (DK)
(72) Inventor: Stichelbout, Thomas, 8600 Silkeborg (DK)
(74) Representative: Plougmann & Vingtoft A/S

(57) **Abstract**

The present invention relates to a battery operated communication device, in particular for use in a sensor network, such as a network for radio frequency (RF) communication of consumption data. The communication device comprises a control unit, a radio unit, a battery supply with at least two batteries for selective supplying the control unit and the radio unit. The device further comprises a battery switch arrangement to select which battery that supplies the control unit and/or the radio unit. A capacitor switch arrangement is present to select either a capacitor arrangement or the battery supply as supply source for the radio unit. A battery management algorithm is based on input parameters to select the battery switch position, and thereby control how the batteries are connected to the control unit and/or the radio unit. In an embodiment the device is a router or repeater for forwarding consumption data from a household to a utility for billing purposes.

## Description

### FIELD OF THE INVENTION

The present invention relates to a battery operated communication device, in particular for use in a sensor network, such as a network for communication of consumption data.

### BACKGROUND OF THE INVENTION

Battery operated devices have the advantage that they are not dependent on a permanent power source, such as a wired connection to an electricity supply net. A battery operated wireless communication device is, however, challenged by a large demand of power capacity to drive the communication unit.

In portable electronic equipment, the battery size moreover hinders the available capacity, however with advanced battery management algorithms implemented, portable electronic equipment prolong the battery life. The normal time frame for communication equipment is days or weeks before a battery exchange or a recharge is needed. An example of the application of battery management to increase the battery life time is given in US patent no. 5,701,597.

However, it is not for all electronic equipment that a time frame of days or weeks can be accepted.

In connection with sensor networks where sensor data are collected wirelessly via radio frequency (RF) signal from remotely placed sensors, such as remotely placed consumption meters for metering a user's consumption of a supplied utility, a network may be build-up where the sensor data are directed to a collecting entity via network sub-stations, such as routers, repeaters, or other types of devices with communication capabilities.

Network sub-stations are advantageously battery supplied to facilitate installation, in particular with respect to avoiding a need for providing a wired supply to the sub-station as well as with respect to an increased freedom in where the sub-station can be placed. However, a battery life time in the range of weeks is unacceptable for this purpose.

### SUMMARY OF THE INVENTION

It would be advantageous to achieve a battery operated communication device suitable for operating as a sub-station in a sensor network which can be operated for years without a need for battery exchange, even in a situation where the data signals are communicated wirelessly in the form of radio frequency signals.

To this end, there is provided a battery operated communication device for communicating radio frequency signals, the device comprises:
- a control unit;
- a radio unit;
- a battery supply comprising a first battery and at least a second battery for selective supplying the control unit and the radio unit;
- a battery switch arrangement controlled by the control unit to select the first and/or the at least second battery to supply the control unit and/or the radio unit supply;
- a capacitor arrangement arranged between the battery switch arrangement and the radio unit so that the battery supply charges at least one capacitor of the capacitor arrangement and where the radio unit can be supplied by stored energy in the at least one capacitor;
- a capacitor switch arrangement controlled by the control unit to select either the capacitor or the battery supply as supply source for the radio unit; and
wherein the control unit stores a battery management algorithm which based on input parameters selects a switch position of the battery switch arrangement.

By application of a battery management algorithm which is based on input parameters it is possible to use known relationships between the conditions under which the batteries are actually used and the expected life time, and thereby adaptively ensure optimal life time. It is known that a battery's cell voltage drops during use. The battery life time is the time it takes the cell voltage to drop below a specific acceptable limit for the specific use. The drop in cell voltage depends on the conditions under which the batteries are used. Important parameters are temperature, magnitude of current drain, duration of current drain, specific discharge state, time since last current use, number of other devices with which the device communicates directly with, etc. The battery management algorithm may implement battery characteristics under specific various use-conditions, and based on the input parameters select the switch positions which maximize battery life time under the given real use-conditions as determined from an analysis of the stored battery characteristics.

The battery life can be prolonged by implementing a battery management algorithm that seeks to spare the power drain from the batteries based on the conditions of use. Nevertheless, with frequent radio transmissions, it is an advantage to control the peak current drain which occurs during a radio transmission. In the current invention, this is done by the provision of the capacitor arrangement to reduce or even remove such peak current drain. The peak current drain from the batteries is thereby reduced, which support the battery management algorithm in increased life time of the batteries. However, when battery lifetime becomes so large that the batteries can be operated for several years, there is a risk of passivation of the batteries. Passivation of batteries can be countered by motioning of the batteries. Battery motioning is obtained by subduing the batteries to dynamic current drain conditions, such as burst current drain, in accordance with pre-specified criteria. In the current invention, the burst current drains that occur during radio transmissions, which are removed from direct drain from the batteries by the application of the capacitor arrangement, can selectively be used to motion the batteries to counter passivation. This is obtained by application of the capacitor switch arrangement. Burst current drains for motioning the batteries may thus be done as a part of the normal operation, and a high power efficiency may thereby be obtained.

### BRIEF DESCRIPTION OF THE DRAWINGS

Embodiments of the invention will be described, by way of example only, with reference to the drawings, in which
Fig. 1 schematically illustrates battery operated communication devices in the form of routers or repeaters as part of a sensor network; and
Figs. 2 and 3 schematically illustrate block representations of elements of a battery operated communication device for communicating radio frequency signals in accordance with different embodiments of the present invention.

### DESCRIPTION OF EMBODIMENTS

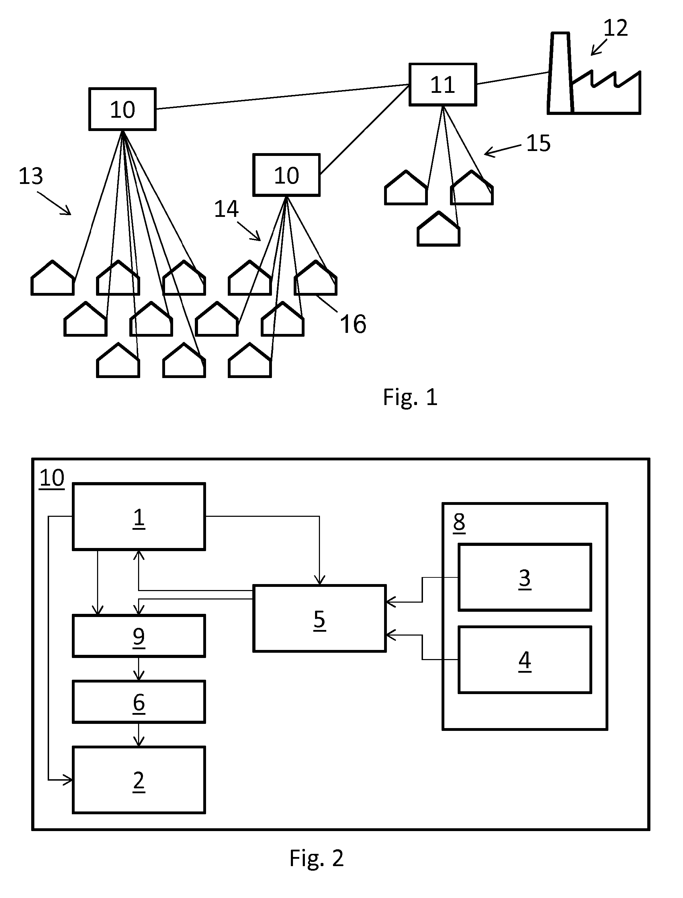

Fig. 1 schematically illustrates battery operated communication devices in the form of routers or repeaters 10 as part of a wireless sensor network 13-15 for collecting measured consumption data of a supplied utility for billing purposes. The figure shows groups of households 16, each comprising a consumption meter (not shown) which is remotely read by collecting the utility data via the sensor network using RF signals. In the illustrated example, two groups 13, 14 of consumption meters are out of range of the sub-collector 11, whereas one group 15 of consumption meters is in range of the sub-collector 11, here illustrated in the form of a so-called concentrator 11 which collects consumption data from a large number of households to be transferred to the main collector, here illustrated as the utility 12. The utility may receive data from a number of concentrators 11, and each concentrator may be connected to a number of routing devices or repeaters 10. The repeaters 10 acts as network nodes where data received from a consumptions meter is forwarded to the sub-collector, which is in charge of collecting data from a predefined list of assigned meters, and forward these data to the utility 12. The communication node devices are installed in order to ensure a signal path, and the location is inter alia decided based on the network topology and signal coverage. By application of battery powered communication devices a greater freedom in the specific location is obtained, as well as a more effective on-site installation is achieved. The communication device 10 may also be a unit attached to or incorporated in the consumption meter. In an example situation, a consumption meter is installed at a household for measuring the amount of utility used by the household. This consumption data is periodically transmitted via a build-in RF communication unit to the repeater 10 via a direct radio link. The repeater collects consumption data from a number of assigned consumption meters with which it is directly linked and forwards these data via a radio link to a next level in the network. This next level may be a new repeater, a concentrator 11, or the main collector 12, depending on the network topology.

In the illustrated example, the sub-collector 11 is disclosed to be in the form of a concentrator 11 which is fixed. In alternative embodiments, also mobile collector solutions may be applied, such as drive-by or walk-by collection of data.

The total network is in an embodiment a radio network, however advantageously at least the network between the concentrator and the consumption meters is a radio network, whereas the link between the sub-collector (11) and the utility (12) may be of any suitable type.

Fig. 2 illustrates an overall schematic block representation of elements of a battery operated communication device 10 for communicating radio frequency signals in accordance with embodiments of the present invention. The device comprises a control unit 1, typically in the form of a micro-controller unit MCU comprising either application specific integrated circuits (ASIC) or programmable general purpose logic circuits, i.e. a general purpose micro processing unit. Additionally, the device comprises a radio unit 2 for receipt and transmission of radio frequency (RF) signals. The radio unit may also comprise a controlling sub-unit which receives control commands from the control unit 1 and operates the radio unit 2 accordingly. The device further comprises a battery supply 8 with a first battery 3 and a second battery 4. In general at least two batteries are present however more batteries may be used. In a particular embodiment such batteries as 3.6 V lithium-thionyl chloride (Li-SOCl₂) with a nominal capacity of 17 Ah may be used

The control unit 1 and the radio unit 2 both need power to operate. In a general implementation, a switch arrangement 5 is controlled by the control unit 1 to select the batteries which supply the control unit and the radio unit supply. The specific switch position is controlled in accordance with a battery management algorithm which based on input parameters selects the switch position of the switch arrangement 5, i.e. the specific supply source for the control unit and the radio unit.

Generally the voltage level of the batteries are matched to the rated input voltage of the control unit, which is typically a few volts for low power IC's, such as 3.6 volts. However, during radio transmission, the current drain arising with such a low voltage of the battery to match the required power needed by the radio risk depleting the battery, therefore a battery management algorithm is employed to make sure the radio is supplied in a manner which spares the battery. In a general embodiment, the battery discharge state of the two batteries can be monitored, and the specific battery used for the next radio transmission, can be selected based e.g. on an algorithm which correlates discharge state, current drain and battery life, such correlation can be obtained from a known battery characteristics. In other embodiments, may other management algorithms be used.

Fig. 2 further illustrates a capacitor arrangement 6 arranged between the switch arrangement 5 and radio unit 2. The battery supply may thereby charge capacitors of the capacitor arrangement 6, so that during the radio transmission, the supply of the radio unit is obtained using the stored energy in the capacitor 5. In this way the drain on the battery can be done slowly and a peak drain during radio transmission can be avoided. In embodiments, the battery management algorithm may control the switches so that during radio transmission the batteries are not directly connected to the radio units, whereas between transmissions, the batteries slowly charge the capacitors of the capacitor arrangement.

Fig. 2 moreover illustrates a capacitor switch arrangement 9 arranged so that either the capacitors of the capacitor arrangement 6 or the battery supply can act as supply source for the radio unit during transmission.

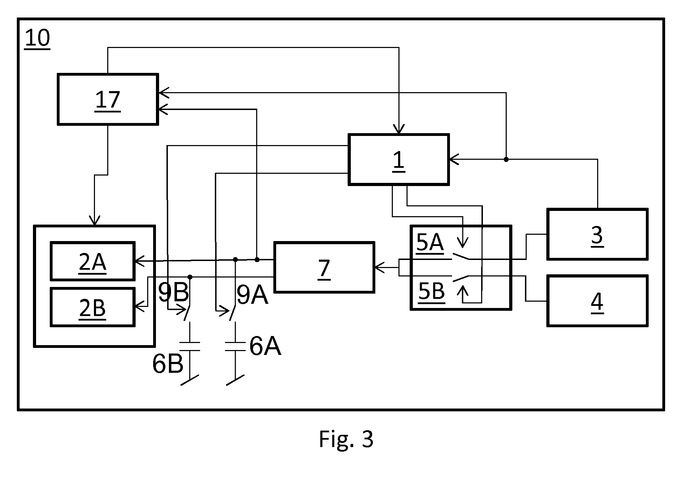

Fig. 3 illustrates an embodiment of a battery operated communication device 10 in accordance with the present invention. The embodiment specifies advantageous switch arrangements where the burst current drains for motioning the batteries can be done as a part of the normal operation, and thereby obtaining high power efficiency.

In this embodiment, the first battery 3 permanently supplies the control unit 1. This is advantageous since it is a simple way of ensuring that the control unit is permanently connected to a power supply. Loss of power to the control unit would cause the device to stop functioning. The battery switch arrangement is implemented as two switches 5A, 5B to control the battery connection to the radio unit. The first, second or both batteries may be selected as supply source to the radio unit in accordance with instructions implemented by the battery management algorithm.

In addition to the elements of Fig. 2, Fig. 3 further comprises a divider unit 7, and a sub-division of the radio unit into a low power unit 2A for operating the radio unit during non-transmission, including receipt, and a high power unit 2B for delivering power during transmission. Fig. 3 moreover illustrates capacitor switches 9A and 9B, as well as capacitors 6A and 6B. One capacitor 6A is connected to the low power unit 2A, and one capacitor 6B is connected to the high power unit 2B, the capacitors are connected via the respective switches 9A, 9B. The figure illustrates two capacitor switches, a single capacitor switch may also be used, e.g. placed at the right-hand side of the divider 7. The figure also illustrates a level shifter 17, which may be used in embodiments to improve the communication between the controller unit and the radio unit, by ensuring that the logic levels of the digital circuits of the control unit and the radio unit match.

The divider unit 7 is an arrangement of electronic components which ensures that a single input received from the switch arrangement, i.e. received from the connected battery is split into two (or more) outputs for supplying sub-units of the radio unit, in this way each sub-unit of the radio is selectively supplied, which renders possible that noise introduced on each supply can be filtered separately for optimal radio performance, since appropriate filtering components may be selected for each sub-unit.

The operation of the communication device and the role of the battery management algorithm is now explained in the below non-limiting example based on the embodiment of Fig. 3.

The control unit 1 is permanently supplied from the first battery 3, whereas the radio unit is selectively supplied from the first and/or the second battery 3, 4.

The example is based on a so-called normal operation of the communication devices which comprises three phases or modes which are cyclic repeated: standby → listen → transmission → standby ... Other modes of operation can be envisioned, such as device acquisition mode.

A normal cycle may be implemented to last for 10-20 seconds, where the standby phase is the longest, lasting for several seconds, and the other two phases are typically in the sub-second range, and even in the millisecond range.

In the given example, the switches 5A, 5B are initially set as:
SW(5A) = 0; SW(5B) = 1; where a switch setting of 0 indicates that the switch is open (i.e. interrupted), whereas a switch setting of 1 indicates that the switch is closed (i.e. conducting).

Thus initially, the first battery 3 supplies only the control unit 1, whereas the second battery 4 supplies the radio unit. Moreover, the capacitor switches are also closed, i.e.: SW(9A) = 1; SW(9B) = 1.

The battery management algorithm is implemented by the computing unit. The battery management algorithm basically is a collection of rules, which based on pre-specified criteria and input parameters determine the switch configuration.

This initial switch configuration is maintained during normal operation in the three phases. In the standby phase, the two capacitors are charged while the radio draws the low standby current. In the listen phase, the radio unit utilizes a little more power to be able to receive signals, nevertheless only a small amount of power is drawn. Therefore during standby and listen, the capacitors are effectively charged while a limited amount of current is delivered to the radio unit.

During radio transmission maximum current drain is required, however by virtue of the divider 7 the batteries are not exposed to the peak current drain, since the divider acts as a current limiter and ensures that most of the power is taken from the capacitors 6A, 6B. Alternatively, a dedicated current limiting circuit may be present between the capacitor arrangement and the batteries, so that the switches may remain closed without draining the batteries.

Simultaneous with normal operation, the computing unit receives one or more input parameters. These input parameters are used as a basis for the switch configuration. The input parameters can be selected from, but not limited to, one or more of: temperature, discharge state of one or both of the batteries, time of operation of one or both of the batteries, the number of devices assigned for direct communication, etc.

For example, if the temperature drops below a specific limit, both batteries may be used to supply the radio unit, e.g., for a measured temperature below a pre-specified limit, SW(5A)=1 and SW(5B)=1, otherwise SW(5A)=0 and SW(5B)=1.

In another example, the discharge state of the two batteries is monitored. If e.g. that the second battery drops below a certain limit, e.g. because it has been depleted by the radio transmissions, the switches are set, so that the first batteries supplies both the radio unit and the computing unit.

The switches may also be set, so that when one of the batteries has been operated for more than a given time, the battery is decoupled.

During normal operation, the capacitor switches are closed, however, as specified by the motioning algorithm the switches may occasionally be interrupted. This result in that current is drawn directly from the connected battery or batteries. Depending on the desired burst current drain, the capacitor switches may be interrupted during listen mode or transmission mode where the current draw is higher than during standby mode, and then closed again. By periodically exposing the batteries to a higher current drain than normal current drain, the batteries are motioned which prevents, or at least diminish, passivation and prolongs the life time. A current burst once a month is appropriate for many battery types. However, the specific motioning interval may depend on the type of battery, the normal current drain as well as other factors. In a specific embodiment 20 mA may be drawn for 30 seconds from the battery during motioning. The specific magnitude and course of the current burst is normally not crucial. However, the drain should normally be substantially larger than the standby drain, such as a factor 20 larger, a factor 100 larger or even larger yet. The current burst may also be applied as a series of bursts, such as 2 to 5 bursts in succession. Generally between 5 and 30 mA may be drawn for more than one second, such as between 1 and 60 seconds.

The motioning algorithm may in many situations be implemented as a periodic burst current drain or series of current drains in accordance with pre-specified criteria or conditions. For example, the batteries may be motioned if the ambient temperature has been measured to be below a specific limit for a given period of time. The computing unit may analyse the de-charging characteristic of a given battery, and in accordance with a given development, i.e. a too rapid de-charging than expected, motion the battery. The pre-specified criteria may also be specified as a periodic criterion, e.g. dependent on a given absolute time, a given operation time, a given number of transmissions, etc.

In embodiments, the communication device may update the battery management algorithm via an update signal received by the radio unit. The updated battery management algorithm may be done in dependence upon a given battery state prior to the update.

The communication device may further support that a dedicated instruction can be sent to the device in order to set specific switch positions of the battery switch arrangement and/or the capacitor switch arrangement. In this manner the batteries may manually be motioned, which may be useful in certain situations.

Only a few examples of battery management algorithm which selects switch states are given above. However, it is within the capabilities of the skilled person to implement further schemes and/or rules for the settings of the various switches in accordance with embodiments of the present invention.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. A battery operated communication device (10) for communicating radio frequency signals, the device comprises:
• a control unit (1);
• a radio unit (2);
• a battery supply (8) comprising a first battery (3) and at least a second battery (4) for selective supplying the control unit and the radio unit;
• a battery switch arrangement (5) controlled by the control unit to select the first and/or the at least second battery to supply the control unit and/or the radio unit supply;
• a capacitor arrangement (6) arranged between the battery switch arrangement and the radio unit so that the battery supply charges at least one capacitor of the capacitor arrangement and where the radio unit can be supplied by stored energy in the at least one capacitor;
• a capacitor switch arrangement (9) controlled by the control unit to select either the capacitor or the battery supply as supply source for the radio unit; and
wherein the control unit stores a battery management algorithm which based on input parameters selects a switch position of the battery switch arrangement (5).

2. The device according to claim 1, wherein the first battery (3) is permanently supplying the control unit, whereas the battery switch arrangement controls the connection of the first battery and at least a second battery to the radio unit.

3. The device according to any of the preceding claims further comprising a divider unit (7) for dividing an input received from the switch arrangement (5) into two or more outputs for supplying sub-units of the radio unit.

4. The device according to claim 3 where each output of the two or more outputs for supplying sub-units of the radio unit comprises a capacitor switch (9) controlled by the control unit to select either a capacitor of the capacitor arrangement or the battery supply as supply source for the radio sub-unit.

5. The device according to any of the preceding claims, wherein the battery management algorithm further controls a switch position of the capacitor switch arrangement (9).

6. The device according to any of the preceding claims, wherein the input parameters is selected from the groups consisting of: temperature, discharge state of one or more of the first battery and at least a second battery, time of operation of one or more of the first battery and at least a second battery, accumulated current drain of one or more of the first battery and at least a second battery, or number of devices assigned as direct communication link.

7. The device according to any of the preceding claims, wherein the battery management algorithm comprises a motioning algorithm which implements burst current drain from the batteries in accordance with pre-specified criteria.

8. The device according to any of the preceding claims, further comprising a level shifter (17) to match the logic levels of the digital circuits of the control unit and the radio unit.

9. The device according to any of the preceding claims, wherein the battery management algorithm can be updated via an update signal received by the radio unit.

10. The device according to any of the preceding claims, wherein the switch position of the battery switch arrangement and/or the capacitor switch arrangement can be set by a control signal received by the radio unit.

11. The device according to any of the preceding claims, wherein the device is a repeater device in a radio network, a router device in a radio network, a concentrator device in a radio network, or a communication unit attached to or incorporated in a consumption meter for providing communication capabilities to the consumption meter.
